# DEMANDE DE BREVET EUROPEEN

(11) **EP 1 600 755 A1**
(43) Date de publication de la demande: **30.11.2005**
(21) Numéro de dépôt: 05300397.6
(22) Date de dépôt: 23.05.2005
(51) Int. Cl.: G01M 15/00, G01M 7/06

(54) **Dispositif de simulation de vibrations, et banc d'essai de moteurs à combustion interne équipé d'un tel dispositif**

(30) Priorité: 24.05.2004 FR 0405543
(71) Demandeur: Renault SAS, 92100 Boulogne Billancourt (FR)
(72) Inventeur: Herrera, Daniel Ignacio, 27600, GAILLON (FR)
(74) Mandataire: Rougemont, Bernard

(57) **Abrégé**

Le dispositif de simulation pour un banc d'essai de moteur à combustion interne comporte des moyens (14) de contrôle du débit des gaz d'échappement pour simuler une perte de charge induite par une ligne d'échappement, et des moyens (20,21,25) de reproduction de vibrations, agissant sur un élément de liaison (15) solidaire du moteur (12) et destiné à relier la ligne d'échappement au moteur, pour simuler des vibrations provenant de la dite ligne d'échappement.

## Description

La présente invention concerne un dispositif de simulation de vibrations, et un banc d'essai de moteurs à combustion interne équipé d'un tel dispositif.

On connaît déjà de tels bancs d'essai où les moteurs et leurs différents composants ou accessoires, formant globalement ce qu'on appelle un groupe moteur ou moto-propulseur, peuvent être testés dans diverses conditions de fonctionnement, que l'on cherche à faire correspondre au mieux avec les conditions de fonctionnement réelles auxquelles le moteur sera soumis en utilisation normale ultérieure, en particulier lorsqu'il sera monté sur un véhicule.

Couramment cependant, compte tenu de la spécificité des bancs d'essai moteurs, la sortie du collecteur d'échappement est simplement reliée à un système d'extraction visant essentiellement à évacuer les gaz produits lors du fonctionnement du moteur pendant les essais.

Mais il s'est avéré que la validation des différents composants du moteur sur le banc d'essai a besoin notamment de tenir compte :
- de l'influence de la ligne d'échappement sur le moteur, pour ce qui concerne au moins les vibrations dont la dite ligne est la cause et qui sont transmises au moteur,
- et aussi de la perte de charge des gaz d'échappement subie dans la dite ligne.

Or les bancs d'essais sont généralement incapables d'accueillir une ligne d'échappement complète, et ce problème est d'autant plus marqué que, en fonction du moteur et du véhicule, cette ligne sera différente.

Il s'est donc avéré nécessaire de trouver des moyens permettant de résoudre ce problème, pour améliorer la fiabilité des essais moteurs, en réalisant ces essais dans des conditions les plus proches possibles du fonctionnement en service normal.

Dans le domaine de la simulation de vibrations, on connaît notamment par le document JP-1013668, un système prévu pour simuler simultanément des bruits et des vibrations dans une enceinte expérimentale où une personne prend place.

Dans un domaine plus proche des bancs d'essai de moteurs thermiques, le document US-2001/0002459 décrit un banc d'essai d'une ligne d'échappement, dans lequel la ligne d'échappement, d'une part, et le moteur ou un simulateur de moteur, d'autre part, sont respectivement montés sur des tables séparées équipées d'actionneurs et de moyens de mesure pour générer et mesurer les vibrations de chaque partie et leurs influences sur la ligne d'échappement testée.

Le document WO-01/14845 décrit aussi un système de ce type pour la simulation sur banc du comportement d'un échappement d'automobile.

Mais aucun de ces systèmes ne permet de résoudre le problème évoqué ci-dessus, de la simulation de l'ensemble des effets de l'échappement sur le comportement du moteur en cours de test.

La présente invention a pour but de résoudre ce problème et vise en particulier à fournir un dispositif de simulation et un banc d'essais susceptible de recevoir facilement divers types de moteurs, et de simuler divers types de lignes d'échappement.

Avec ces objectifs en vue, l'invention a pour objet un dispositif de simulation pour un banc d'essai de moteur à combustion interne, caractérisé en ce qu'il comporte des moyens de contrôle du débit des gaz d'échappement pour simuler une perte de charge induite par une ligne d'échappement, et des moyens de reproduction de vibrations, agissant sur un élément de liaison solidaire du moteur et destiné à relier la ligne d'échappement au moteur, pour simuler des vibrations provenant de la dite ligne d'échappement.

Ainsi, grâce à l'invention, on peut simuler au niveau du moteur les effets d'une ligne d'échappement réelle, sans utiliser cette ligne, en combinant une simulation des vibrations générées par une ligne d'échappement sur le moteur avec une simulation des pertes de charge dans cette ligne. On notera que l'élément de liaison auquel les vibrations sont appliquées est normalement la bride ou organe similaire utilisé classiquement pour relier la ligne d'échappement au bloc moteur. Cet élément de liaison est donc solidaire du groupe moteur, mais peut être séparé du collecteur d'échappement par divers organes tels que turbocompresseur, catalyseur d'oxydation, etc.

Un avantage est que ce système de simulation peut être compact, avec un encombrement bien moindre que celui d'une ligne d'échappement réelle. Un autre avantage est qu'il devient plus facile de faire des essais en simulant des lignes d'échappement différentes, ayant des caractéristiques diverses tant du point de vue des propriétés vibratoires, de leur inertance, que des contre-pressions souhaitées. On notera incidemment, comme on le verra mieux par la suite, que l'on pourra aussi, au moins dans certains modes de réalisation de l'invention, simuler également des lignes d'échappement qui n'existent encore qu'à l'état de maquette numérique en bureau d'étude.

Selon une disposition particulière de l'invention, la simulation de la perte de charge est réalisée au moyen d'une vanne réglable placée sur un conduit d'évacuation des gaz d'échappement relié au dit élément de liaison. La vanne peut être simplement réglée dans une position fixe pour reproduire par exemple une perte de charge à puissance maximale du moteur. Préférentiellement cependant, la vanne est pilotée de manière à reproduire la perte de charge de la ligne d'échappement réelle en fonction du régime et de la charge du moteur. Préférentiellement, ce conduit d'évacuation est suffisamment flexible et long pour que la dite vanne puisse être placée sur ce conduit à distance de l'élément de liaison, et ainsi être découplée le plus possible, du point de vue de la transmission de vibrations, de l'élément de liaison. Ceci vise à ce que la présence de la vanne réglable n'ait pas d'incidence sensible sur le régime vibratoire souhaité pour simuler la ligne d'échappement.

Selon un premier mode de réalisation, les moyens de reproduction de vibrations comprennent un ensemble de trois systèmes mécaniques passifs, chacun de ces systèmes étant adapté pour reproduire des vibrations orientées selon une direction préférentielle et selon plusieurs modes propres, et chaque système étant raccordé à l'élément de liaison de manière à lui transmettre ses vibrations seulement dans la dite direction préférentielle qui lui est propre, et les directions préférentielles des trois systèmes étant concourantes ou orthogonales entre elles.

Cette disposition permet d'agir de manière ciblée sur les composantes vibratoires, selon des directions prédéfinies, en particulier selon les axes d'un repère orthonormé, et selon chaque axe d'adapter chaque mode vibratoire. Mais elle nécessite de faire au préalable une analyse correspondante, avec décomposition selon chacune des dites directions prédéfinies, des caractéristiques vibratoires de la ligne d'échappement à simuler dans des conditions réelles de fonctionnement, puis de reproduire ces caractéristiques en adaptant de manière adéquate chaque système mécanique passif.

Préférentiellement, dans ce premier mode de réalisation, chaque système mécanique passif comprend une pluralité de sous-ensembles ayant chacun un mode vibratoire propre, selon la direction préférentielle du système, chaque sous-ensemble comportant une masse, un ressort et un amortisseur de caractéristiques adaptées à son mode vibratoire propre.

Selon un deuxième mode de réalisation, les moyens de reproduction de vibrations comprennent un système mécanique passif comportant une masse primaire fixée à l'élément de liaison et sur laquelle sont connectés une pluralité de sous-ensembles ayant chacun un mode vibratoire propre dans une direction propre, ces sous-ensembles étant connectés sur la masse primaire de manière que leurs directions propres soient concourantes ou sensiblement concourantes, et le mode vibratoire et l'orientation de la direction propre d'un quelconque des sous-ensembles étant déterminés pour sensiblement reproduire un mode de vibration propre de la ligne d'échappement simulée, et de manière que la combinaison des directions et modes vibratoires propres de tous les sous-ensembles corresponde aux caractéristiques vibratoires de la ligne d'échappement.

Cette disposition permet de simplifier les moyens à mettre en oeuvre. Pour donner une explication simplifiée des concepts à la base de ce mode de réalisation, on peut dire qu'une analyse permettant de définir les sous-ensembles consiste alors à rechercher les différents modes vibratoires de la ligne d'échappement et déterminer pour chacun son orientation principale correspondante, puis on reproduit par un sous-ensemble passif un mode vibratoire correspondant à une fréquence ou un groupe de fréquences déterminées lors de l'analyse, et on relie ce sous-ensemble à la masse primaire selon l'orientation déterminée précédemment. Il suffit alors d'utiliser un nombre de sous-ensembles mécaniques limité au nombre de modes vibratoires souhaité, et d'adapter leur orientation, pour recréer par combinaison de leurs effets les caractéristiques vibratoires globales, donc l'inertance, de la ligne d'échappement. Cela permet d'utiliser moins de ces sous-ensembles mécaniques, mais complique leur mise en oeuvre du fait de leurs interactions, de leur couplage, et de leurs influences respectives.

Selon un autre mode de réalisation, les moyens de reproduction de vibrations comprennent un système actif de génération de vibrations, qui préférentiellement comprend une pluralité d'actionneurs reliés à l'élément de liaison et ayant des directions d'excitation réparties dans l'espace.

Selon une première variante de ce troisième mode de réalisation, le système actif de génération de vibrations comprend des capteurs fixés sur le groupe moteur pour déterminer l'état vibratoire du groupe moteur et/ou de l'élément de liaison et un contrôleur pour piloter les actionneurs en fonction de la réponse vibratoire évaluée à partir des signaux des capteurs et de la comparaison de cette réponse à une consigne représentative de la réponse vibratoire du groupe moteur et/ou de l'élément de liaison dans des conditions de fonctionnement réelles lorsqu'une ligne d'échappement que l'on simule est raccordée sur l'élément de liaison, de manière à adapter le fonctionnement des actionneurs pour atteindre la dite consigne.

Selon une deuxième variante de ce troisième mode de réalisation, le système actif de génération de vibrations comprend des capteurs et un contrôleur pour piloter en accélération les actionneurs en fonction d'une consigne prédéterminée représentative de la réponse vibratoire, plus précisément de l'inertance, d'une ligne d'échappement réelle ou virtuelle. Il est ici rappelé que l'inertance se définit de manière générale, par la formule γ(ω)/F(ω), comme le rapport entre la réponse en accélération γ d'une structure et la force d'excitation F qui est la cause de cette accélération, exprimée en fonction de la fréquence ω de la dite force d'accélération. Pour une structure donnée, ici donc une ligne d'échappement, l'inertance est représentative des caractéristiques vibratoires de cette structure.

Dans ces deux variantes, les actionneurs peuvent être des actionneurs électromagnétiques, pneumatiques, piézo-électriques ou hydrauliques. Le dispositif de simulation pourra aussi comporter des moyens de refroidissement pour refroidir les actionneurs et/ou les capteurs.

D'autres caractéristiques et avantages apparaîtront dans la description qui va être faite de plusieurs exemples de réalisation de l'invention.

On se reportera aux dessins annexés dans lesquels :
- la figure 1 est une représentation schématique d'un premier mode de réalisation de l'invention,
- la figure 2 est une représentation schématique d'un deuxième mode de réalisation de l'invention,
- la figure 3 est une représentation schématique illustrant les moyens mis en oeuvre dans un troisième mode de réalisation de l'invention,
- la figure 4 est une représentation schématique du banc d'essai pour la mise en oeuvre de ce troisième mode de réalisation de l'invention,

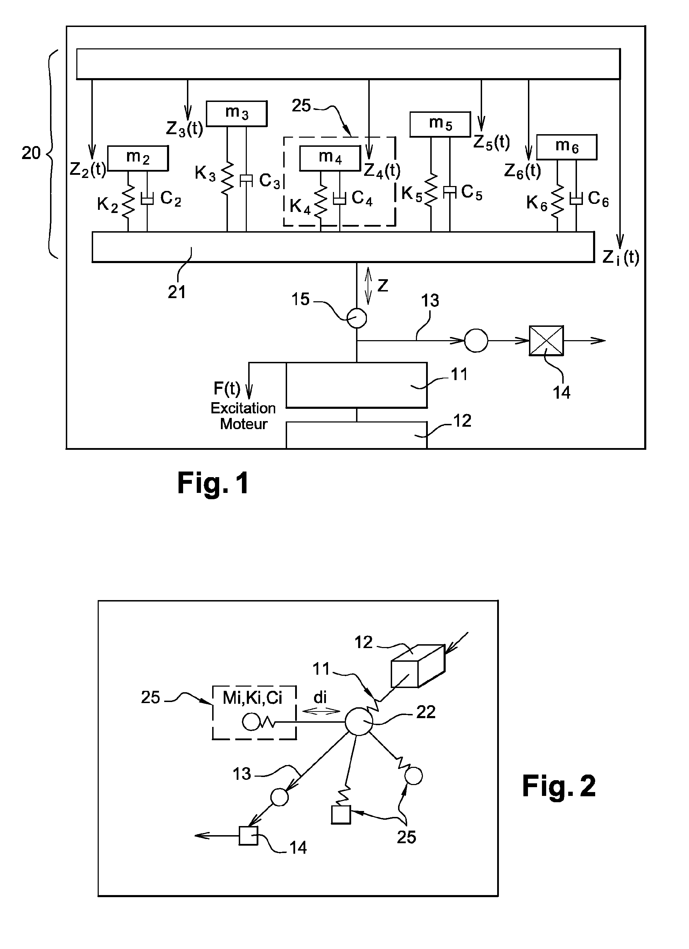

Sur le schéma de la figure 1, illustrant un premier mode de réalisation de l'invention, la bride de sortie de l'élément de découplage 11, qui est utilisée en service normal du moteur pour y relier la ligne d'échappement, est solidaire du groupe moteur 12 en y étant lié à la sortie du collecteur d'échappement par exemple. Sur cet élément de découplage 11 est relié une extrémité d'un tuyau flexible long 13 raccordé par son autre extrémité sur une vanne 14 pilotée pour contrôler le débit des gaz d'échappement et simuler la perte de charge induite par une ligne d'échappement réelle en fonction du régime et de la charge du moteur.

La bride de sortie de l'élément de découplage 11 porte par ailleurs un organe de liaison mécanique 15, sur lequel se raccorde un ensemble de trois systèmes mécaniques passifs 20, ayant chacun une direction de vibration préférentielle, ces directions étant préférentiellement orthogonales entre elles. Sur la figure 1, un seul de ces ensembles est représenté, ayant comme direction de vibration préférentielle la direction Z, par exemple dans l'axe de l'élément de découplage 11. On comprendra que les deux autres systèmes mécaniques passifs 20 sont également reliés à l'organe de liaison mécanique 15, en étant orientés selon des axes X et Y orthogonaux à Z et entre eux.

L'organe de liaison mécanique 15 est adapté pour transmettre entre chacun des systèmes mécaniques passifs 20 et l'élément de liaison constitué par l'élément de découplage 11, des excitations selon seulement une direction axiale correspondant à la direction de vibration préférentielle propre à chaque système mécanique passif, la direction Z pour le système représenté figure 1.

Chaque système mécanique passif 20 est par exemple constitué d'une masse primaire 21 portant une pluralité de sous-ensembles M-K-C 25, disposés en parallèle et ayant une direction de vibration orientée selon la direction de vibration préférentielle du système mécanique passif. Chaque sous-ensemble 25 est un système masse mᵢ-ressort Kᵢ-amortisseur Ci, avec i variant de 2 à 6 dans l'exemple représenté. Chaque sous-ensemble est déterminé pour reproduire un des modes propres de vibration de la ligne d'échappement dans la direction de vibration préférentielle, et l'ensemble est ajusté pour bien simuler la réponse en fréquence de la ligne d'échappement réelle.

Dans ce premier mode de réalisation, on décompose en fait le régime vibratoire selon trois axes X, Y, Z, en principe orthogonaux, et, pour chaque direction, on établit un système vibratoire de caractéristique Zⱼ(t), j étant X, Y ou Z, reproduisant différents modes vibratoires Zⱼ(t) chacun défini par un des dits sous-ensembles M-K-C 25. Ce mode de réalisation repose donc sur la connaissance préalable de la fonction d'inertance de la ligne que l'on souhaite simuler. On en tire les différentes composantes selon les trois axes, et selon chaque axe les différents modes vibratoires. A partir de là, on simule chacun de ces modes par un sous-ensemble M-K-C 25 comprenant une masse m, un ressort K, un amortisseur C. On assemble plusieurs de ces sous-ensembles, cinq dans l'exemple représenté, en parallèle sur la masse primaire m1 qui est reliée à l'élément de liaison 11, constitué par l'élément de découplage. L'organe de liaison mécanique 15 est constitué par un organe de liaison de type rotule parfaite, pour faire en sorte que, du mieux possible, seules les excitations qui sont orientées selon la direction préférentielle propre du système mécanique passif 20 soient transmises entre le système vibratoire 20 et l'élément de liaison 11. A cette fin, la liaison de type rotule parfaite vise à l'élimination des frottements parasites susceptibles de générer une transmission de vibrations selon des directions autres que la dite direction préférentielle.

On réalise le même montage pour les deux autres directions, de sorte qu'on reproduit bien les caractéristiques vibratoires globales de la ligne d'échappement réelle, par recomposition des effets de l'ensemble des trois systèmes.

On notera incidemment que chaque sous-ensemble 25 peut lui-même être composé de plusieurs systèmes M-K-C en série, pour simuler deux modes vibratoires très proches.

Dans le deuxième mode de réalisation, représenté figure 2, on retrouve une masse primaire 22 reliée à l'élément de liaison 11, constitué par l'élément de découplage connecté au groupe moteur 12, et un flexible long 13 raccordé sur une vanne pilotée 14, comme dans l'exemple précédent.

Dans ce mode de réalisation, une pluralité de sous-ensembles M-K-C 25 ayant chacun leur mode vibratoire propre et une direction de vibration dᵢ propre sont connectés sur la masse 30. Les directions dᵢ des dits sous-ensembles 25 sont radialement concourantes, ou sensiblement concourantes. Chaque sous-ensemble M-K-C 25 est déterminé pour reproduire un des modes propres de vibration de la ligne d'échappement dans la direction de vibration préférentielle, et l'ensemble est ajusté pour bien simuler la réponse en fréquence de la ligne d'échappement réelle .

Comme dans le premier exemple, chaque sous-ensemble 25 peut lui-même être composé de plusieurs systèmes M-K-C en série, pour simuler deux modes vibratoires très proches.

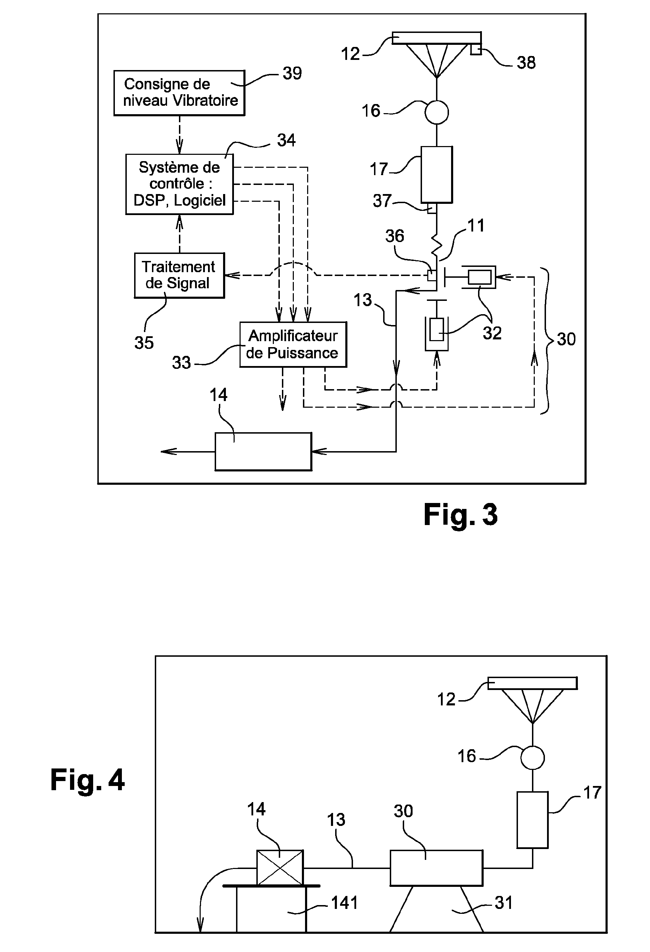

Le troisième mode de réalisation est illustré aux figures 3 et 4. Dans ce mode de réalisation, le banc d'essai comporte un système actif de génération de vibrations 30 porté par un support 31 et comportant un ensemble d'au moins trois actionneurs 32 agissants selon trois axes orthogonaux ou sensiblement orthogonaux. Ces actionneurs 32 agissent sur un élément de liaison 11 qui peut ici aussi être constitué par une bride ou similaire d'un élément de découplage. Sur la figure 3, seuls deux actionneurs agissants selon des directions perpendiculaires, dans le plan de la feuille, ont été représentés, le troisième étant disposé orthogonalement à ceux-ci. Toutefois, on pourra bien sur utiliser aussi des actionneurs orientés selon des directions non orthogonales.

On notera que dans cet exemple l'élément de découplage est représenté relié au collecteur d'échappement du moteur via un turbocompresseur 16 et un catalyseur d'oxydation 17, par exemple, cette disposition n'étant cependant nullement nécessaire, ni spécifique, à ce mode de réalisation.

Comme dans les exemples précédents, un flexible long 13 partant de l'élément de découplage est raccordé sur une vanne pilotée 14 fixée sur un support 141.

Le système actif de génération de vibrations comporte aussi un amplificateur de puissance 33 commandant les actionneurs 32 et piloté par un calculateur de contrôle 34 qui reçoit, via une unité de traitement de signal 35, les signaux provenants de divers capteurs 36, 37, 38 placés sur l'élément de liaison 11, ou en d'autres points éventuels de la ligne, par exemple sur la face d'échappement ou juste en aval du catalyseur, comme représenté sur le dessin, le nombre et la localisation des capteurs n'étant nullement limitatifs. Le calculateur 34 reçoit également par ailleurs une consigne 39 de niveau d'amplitude vibratoire et l'information de la fréquence d'excitation primaire.

Les actionneurs vont exciter la bride de sortie de l'élément de découplage lié à la sortie du catalyseur d'oxydation 17, pour contrôler les vibrations de la face d'échappement moteur.

Selon une première variante de mise en oeuvre de ce troisième mode de réalisation, les signaux de niveau vibratoire (amplitude et fréquence) fournis par les capteurs 36, 37 sont envoyés à l'unité de traitement de signal 35. Après traitement, les signaux sont comparés par le calculateur (DSP, ordinateur, logiciel de contrôle automatique) avec une consigne de niveau vibratoire, pour fournir des signaux de commande pour piloter les actionneurs. Ces signaux de commande sont amplifiés par l'amplificateur de puissance 33 pour commander chacun des trois actionneurs pour s'assurer que la réponse vibratoire de la face d'échappement moteur obtenue avec le système actif est la même, en amplitude et phase, que celle obtenue avec une ligne d'échappement réelle, représentée par la valeur de consigne. Cette consigne est obtenue par une mesure du niveau vibratoire, en amplitude et fréquence, de la sortie d'échappement du moteur avec une ligne d'échappement réelle lors d'un balayage en régime et en charge, du régime de ralenti jusqu'à la vitesse maximale du moteur. Les capteurs permettent de réaliser le contrôle automatique en boucle fermée, avec des capteurs d'accélération placés avant l'élément flexible 13 pour mesurer la réponse vibratoire de la face d'échappement après l'excitation des actionneurs pour mettre en application un contrôle en retour. La fréquence d'échantillonnage, la puissance du système de contrôle et la réponse en fréquence des actionneurs sont choisies pour faire une commande en temps réel, et ceci pour toutes les fréquences d'excitation considérées.

Selon une deuxième variante de mise en oeuvre de ce troisième mode de réalisation, au lieu de comparer les signaux, issus des capteurs et traités par l'unité de traitement de signal, avec une consigne représentative du niveau vibratoire d'une ligne d'échappement réelle, le calculateur détermine la réponse des actionneurs nécessaire selon la force d'excitation mesurée et pilote en conséquence les actionneurs. Ce pilotage est effectué sur la base d'un signal de consigne qui est la fonction d'inertance d'une ligne d'échappement réelle ou virtuelle, obtenue par analyse modale expérimentale ou par une simulation des caractéristiques structurelles assistée par ordinateur. Il n'y a plus alors besoin d'une détermination préalable des caractéristiques d'une ligne réelle. Il suffit de déterminer l'inertance de la ligne a priori. Les capteurs 36 situés au niveau du point d'action des actionneurs permettent de contrôler les actionneurs dans une régulation en boucle. Les capteurs 37 situés avant l'élément de découplage 11 et donc plus directement sur la face d'échappement moteur permettent de mesurer la réponse vibratoire ce celle-ci en réponse à l'excitation des actionneurs, pour adapter le pilotage des dits actionneurs selon le signal de consigne désiré et corriger l'erreur de commande en temps réel.

Cette dernière variante permet donc de simuler n'importe quelle ligne d'échappement existante ou future, en changeant simplement, au niveau du signal de consigne d'inertance, les caractéristiques vibratoires et de perte de charge souhaitées. Ceci permet de gagner du temps de mise en place et de mise au point du banc d'essai moteur, puisque ce mode de mise en oeuvre permet notamment d'éliminer le besoin de réaliser un essai de caractérisation vibratoire préalable de la ligne d'échappement.

Dans le troisième mode de réalisation, les actionneurs devront être choisis de manière à être compatibles avec les fréquences et les déplacements requis, généralement des hautes fréquences avec des déplacements très faibles. Si des actionneurs électromagnétiques ne permettent pas une bonne réponse en fréquence, on pourra les remplacer par des actionneurs piézo-électriques par exemple.

Egalement, du fait de la température élevée des gaz d'échappement, il pourra être nécessaire de refroidir le banc d'essai, par soufflage par exemple, pour respecter la température de fonctionnement des actionneurs. On pourra aussi éventuellement utiliser des actionneurs hydrauliques, ou pneumatiques avec des soupapes de contrôle à haute vitesse.

## Revendications

**1.** Dispositif de simulation pour un banc d'essai de moteur à combustion interne, **caractérisé en ce qu'**il comporte des moyens (14) de contrôle du débit des gaz d'échappement pour simuler une perte de charge induite par une ligne d'échappement, et des moyens (20, 25, 30) de reproduction de vibrations, agissant sur un élément de liaison (11) solidaire du moteur (12) et destiné à relier la ligne d'échappement au moteur, pour simuler des vibrations provenant de la dite ligne d'échappement.

**2.** Dispositif de simulation selon la revendication 1, **caractérisé en ce que** les moyens de contrôle du débit des gaz d'échappement pour simuler une perte de charge comportent une vanne réglable (14) pilotée placée sur un conduit (13) d'évacuation des gaz d'échappement relié au dit élément de liaison (11) .

**3.** Dispositif de simulation selon la revendication 2, **caractérisé en ce que** le conduit d'évacuation (13) est suffisamment flexible et long et la vanne (14) est placée sur ce conduit à distance de l'élément de liaison (11), de manière à être découplée, du point de vue de la transmission de vibrations, de l'élément de liaison.

**4.** Dispositif de simulation selon la revendication 1, **caractérisé en ce que** les moyens de reproduction de vibrations comprennent un ensemble de trois systèmes mécaniques passifs (20), chacun de ces systèmes étant adapté pour reproduire des vibrations orientées selon une direction préférentielle et selon plusieurs modes propres, et chaque système étant raccordé à l'élément de liaison (11) de manière à lui transmettre ses vibrations seulement dans la dite direction préférentielle qui lui est propre, et les directions préférentielles des trois systèmes étant concourantes ou orthogonales entre elles.

**5.** Dispositif de simulation selon la revendication 4, **caractérisé en ce que** chaque système mécanique passif comprend une pluralité de sous-ensembles (25) ayant chacun un mode vibratoire propre, selon la direction préférentielle du système, chaque sous-ensemble comportant une masse (m), un ressort (K) et un amortisseur (C) de caractéristiques adaptées à son mode vibratoire propre.

**6.** Dispositif de simulation selon la revendication 1, **caractérisé en ce que** les moyens de reproduction de vibrations comprennent un système mécanique passif comportant une masse primaire (22) fixée à l'élément de liaison (11) et sur laquelle sont connectés une pluralité de sous-ensembles (25) ayant chacun un mode vibratoire propre dans une direction propre, ces sous-ensembles étant connectés sur la masse primaire de manière que leurs directions propres soient concourantes, et le mode vibratoire et l'orientation de la direction propre d'un quelconque des sous-ensembles étant déterminés pour reproduire un mode de vibration propre de la ligne d'échappement simulée.

**7.** Dispositif de simulation selon la revendication 1, **caractérisé en ce que** les moyens de reproduction de vibrations comprennent un système actif (30) de génération de vibrations.

**8.** Dispositif de simulation selon la revendication 7, **caractérisé en ce que** le système actif de génération de vibrations comprend une pluralité d'actionneurs (32) reliés à l'élément de liaison (11) et ayant des directions d'excitation réparties dans l'espace.

**9.** Dispositif de simulation selon la revendication 8, **caractérisé en ce que** le système actif de génération de vibrations comprend des capteurs (36, 37, 38) fixés sur le groupe moteur pour déterminer l'état vibratoire du groupe moteur et/ou de l'élément de liaison (11) et un contrôleur (34) pour piloter les actionneurs en fonction de la réponse vibratoire évaluée à partir des signaux des capteurs et de la comparaison de cette réponse à une consigne représentative de la réponse vibratoire du groupe moteur et/ou de l'élément de liaison dans des conditions de fonctionnement réelles lorsqu'une ligne d'échappement que l'on simule est raccordée sur l'élément de liaison, de manière à adapter le fonctionnement des actionneurs pour atteindre la dite consigne.

**10.** Dispositif de simulation selon la revendication 8, **caractérisé en ce que** le système actif de génération de vibrations comprend des capteurs (36, 37, 38) et un contrôleur (34) pour piloter les actionneurs (32) en fonction d'une consigne prédéterminée représentative de la réponse vibratoire d'une ligne d'échappement réelle ou virtuelle.

11. Dispositif de simulation selon la revendication 8, **caractérisé en ce que** les actionneurs (32) sont des actionneurs électromagnétiques, piézo-électriques, pneumatiques ou hydrauliques.

12. Dispositif de simulation selon la revendication 1, **caractérisé en ce qu'**il comporte des moyens de refroidissement pour refroidir les actionneurs (32) et/ou les capteurs (36, 37, 38).
